# EUROPEAN PATENT SPECIFICATION

(11) **EP 4 064 050 B1**
(45) Date of publication and mention of the grant of the patent: **21.05.2025**
(21) Application number: 20891739.3
(22) Date of filing: 12.11.2020
(51) Int. Cl.: G06F 3/01, G06F 3/14, G06V 40/20, G06V 40/10, G06V 20/20, G06V 10/44, G09G 5/32, G09G 5/38, G09G 5/377, G09G 5/397

(54) **DATA PROCESSING METHOD AND APPARATUS, USER EQUIPMENT, AND AUGMENTED REALITY SYSTEM**
DATENVERARBEITUNGSVERFAHREN UND -VORRICHTUNG, BENUTZERGERÄT UND AUGMENTED-REALITY-SYSTEM
PROCÉDÉ ET APPAREIL DE TRAITEMENT DE DONNÉES, ÉQUIPEMENT UTILISATEUR, ET SYSTÈME DE RÉALITÉ AUGMENTÉE

(30) Priority: 27.11.2019 CN 201911184860
(43) Date of publication of application: 28.09.2022
(73) Proprietor: GUANGDONG OPPO MOBILE TELECOMMUNICATIONS CORP., LTD., Dongguan, Guangdong 523860 (CN)
(72) Inventor: PENG, Dongwei, Dongguan, Guangdong 523860 (CN)
(74) Representative: Grassi, Stefano
(86) International application number: PCT/CN2020/128397
(87) International publication number: WO 2021/104032

(56) References cited:
- CN-A- 102 193 625
- CN-A- 108 479 060
- CN-A- 108 479 060
- CN-A- 109 976 523
- CN-A- 111 061 575
- US-A1- 2012 249 741
- US-A1- 2017 216 729
- US-A1- 2019 224 572

## Description

### CROSS REFERENCE OF RELATED APPLICATION

This application claims a priority from Chinese patent application No. 201911184860.4 and entitled "DATA PROCESSING METHOD AND APPARATUS, USER EQUIPMENT AND AUGMENTED REALITY SYSTEM" filed to the China National Intellectual Property Administration on November 27, 2019.

### FIELD OF THE DISCLOSURE

The disclosure relates to the field of display technologies, and more particularly to a data processing method, a data processing apparatus, a user equipment and an augmented reality system. The invention is set out in the appended set of claims.

### BACKGROUND OF THE DISCLOSURE

In recent years, with progress of science and technology, augmented reality (AR) and other technologies have gradually become the focus of research at home and abroad. Augmented reality is a technology that increases users' perception of a real world through information provided by computer systems. It superimposes content objects such as computer-generated virtual objects, scenes or system prompt information into real scenes to enhance or modify the perception of the real-world environment or data that represent the real-world environment. However, at present, an interactivity between virtual objects displayed in augmented reality and users is too low.

[0003-a] US 2012/024974 A1 discloses a head mounted device for providing an immersive virtual or augmented reality experience for viewing data and enabling collaboration among multiple users. Rendering images in a virtual or augmented reality system may include capturing an image and spatial data with a body mounted camera and sensor array, receiving an input indicating a first anchor surface, calculating parameters with respect to the body mounted camera and displaying a virtual object such that the virtual object appears anchored to the selected first anchor surface. Further operations may include receiving a second input indicating a second anchor surface within the captured image that is different from the first anchor surface, calculating parameters with respect to the second anchor surface and displaying the virtual object such that the virtual object appears anchored to the selected second anchor surface and moved from the first anchor surface.

[0003-b] CN 108479060 A discloses a display control method applied to first electronic equipment. The method includes the steps of obtaining data of at least one target virtual object in a virtual scene image output by second electronic equipment on the condition that the second electronic equipment agrees to share the target virtual object output by the second electronic equipment; outputting the obtained data of the target virtual object so that a user of the first electronic equipment can watch pictures including the real scene and the target virtual object.

[0003-c] CN 109976523 A discloses an information processing method and an electronic device. The information processing method is applied to a slave device and includes the following steps of obtaining reference map information generated by a main device based on a surrounding environment, in which the reference map information is generated based on a reference coordinate system established by the main device; based on the reference map information, determining mapping parameters of the current coordinate system established by the slave device relative to the reference coordinate system, the mapping parameters being used for mapping coordinates in the current coordinate system into coordinates in the reference coordinate system, and controlling to display the virtual object based on the mapping parameters in response to an obtained operation instruction for the virtual object.

[0003-d] CN 102193625 A discloses an image processing apparatus including: an input image acquisition unit for obtaining an input image generated by taking an image of a real space; an image recognition unit for recognizing, when a first user-input representing a start of manipulation is detected, a manipulator used for manipulating a virtual object, in which the manipulator appears in the input image; a calculation unit for calculating, according to a result of the recognition of the manipulator provided by the image recognition unit, a position on a screen of a display device at which the virtual object is to be displayed; a display control unit for displaying the virtual object at the position of the screen of the display device calculated by the calculation unit; and a communication unit for transmitting, when the first user-input is detected, a first notification signal for notifying the start of manipulation to another apparatus displaying the same virtual object.

### SUMMARY OF THE DISCLOSURE

The present disclosure provides a data processing method, a data processing apparatus, a user equipment and an augmented reality system to overcome the above-mentioned defects. The invention is set out in the appended set of claims.

### BRIEF DESCRIPTION OF DRAWINGS

In order to more clearly explain technical solutions in embodiments of the disclosure, the following will briefly introduce the drawings needed to be used in the description of the embodiments. Obviously, the drawings in the following description are only some embodiments of the disclosure. For those skilled in the art, other drawings can be obtained according to these drawings without paying creative labor.
FIG. 1 illustrates a schematic diagram of an augmented reality system provided by an embodiment of the present disclosure.
FIG. 2 illustrates a schematic diagram of a virtual object displayed by a mobile terminal provided by an embodiment of the present disclosure.
FIG. 3 illustrates a schematic flowchart of a data processing method provided by an embodiment of the present disclosure.
FIG. 4 illustrates a schematic flowchart of a data processing method provided by another embodiment of the present disclosure.
FIG. 5 illustrates a schematic diagram of a selection mode of a virtual object provided by an embodiment of the present disclosure.
FIG. 6 illustrates a schematic diagram of displaying virtual objects on a display screen provided by an embodiment of the present disclosure.
FIG. 7 illustrates a schematic flowchart of a data processing method provided by still another embodiment of the present disclosure.
FIG. 8 illustrates a schematic diagram of a motion trajectory of a virtual object provided by an embodiment of the present disclosure.
FIG. 9 illustrates a schematic flowchart of a data processing method provided by even still another embodiment of the present disclosure.
FIG. 10 illustrates a schematic flowchart of block S920 in FIG. 9.
FIG. 11 illustrates a schematic diagram of a target user in a field of view of a first user equipment provided by an embodiment of the present disclosure.
FIG. 12 illustrates a schematic diagram of a target user in a field of view of a first user equipment provided by another embodiment of the present disclosure.
FIG. 13 illustrates a schematic diagram of a blocked area provided by an embodiment of the present disclosure.
FIG. 14 illustrates a schematic diagram of a virtual object in a field of view of a user wearing a first user equipment provided by an embodiment of the present disclosure.
FIG. 15 illustrates a schematic diagram of a virtual object in a field of view of a user wearing a second user equipment provided by an embodiment of the present disclosure.
FIG. 16 illustrates a schematic flowchart of a data processing method provided by further still another embodiment of the present disclosure.
FIG. 17 illustrates a module block diagram of a data processing apparatus provided by an example useful for understanding the invention but outside the scope of the invention as claimed.
FIG. 18 illustrates a block diagram of a data processing apparatus according to another example useful for understanding the invention but outside the scope of the invention as claimed.
FIG. 19 illustrates a module block diagram of a user equipment provided by an embodiment of the present disclosure.
FIG. 20 illustrates a storage unit configured to store or carry a program code for implementing a data processing method according to an example useful for understanding the invention but outside the scope of the invention as claimed.

### DETAILED DESCRIPTION OF EMBODIMENTS

In order to enable those skilled in the art to better understand the scheme of the application, the technical scheme in the embodiment of the application will be clearly and completely described below in combination with the accompanying drawings in the embodiment of the application.

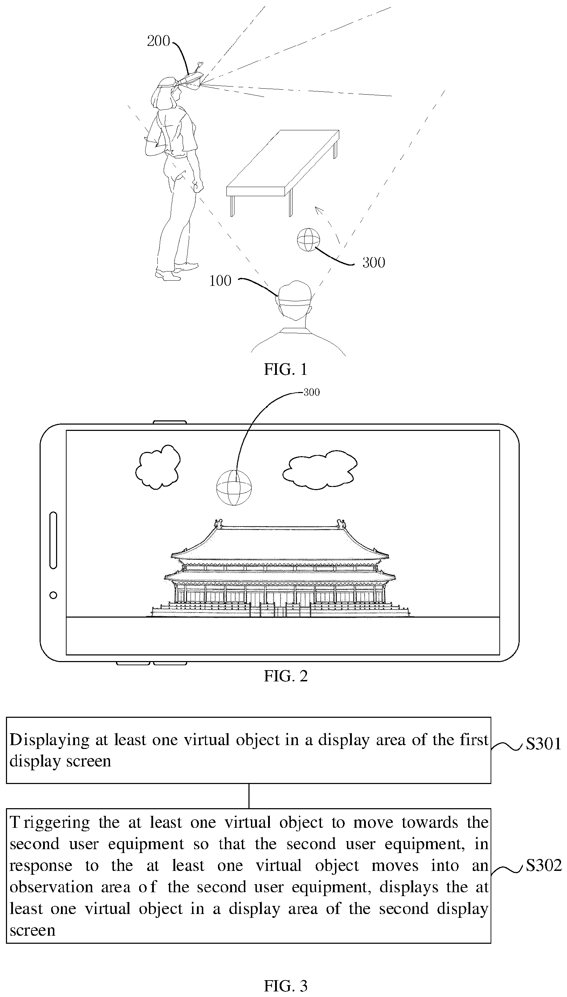

FIG. 1 illustrates an augmented reality system provided by an embodiment of the present disclosure, and the augment reality system may include a first user equipment 100 and a second user equipment 200.

In at least one embodiment of the present disclosure, both the first user equipment 100 and the second user equipment 200 may be head-mounted display devices or mobile devices such as mobile phones and tablet devices. When the first user equipment 100 and the second user equipment 200 are head-mounted display devices, the head-mounted display device may be an integrated head-mounted display device. The first user equipment 100 and the second user equipment 200 may also be smart terminals such as mobile phones connected to an external head-mounted display device, that is, the first user equipment 100 and the second user equipment 200 may be used as processing and storage devices of the head-mounted display device, plugged in or connected to the external head-mounted display device to display a virtual object in the head-mounted display device.

In at least one embodiment of the present disclosure, the first user equipment 100 may include a first display screen and a first camera. As an implementation, when the first user equipment 100 is a mobile device, the first display screen is the display screen of the mobile device, and the first camera is the camera of the mobile device. As another implementation, the first user equipment 100 may be a head-mounted display device, the first display screen may be a lens of the head-mounted display device, the lens can be used as a display screen to display an image, and the lens can also transmit light. When the user wears the lens, when the image is displayed on the lens, the user can see the image displayed on the lens, and can also see real-world objects in the surrounding environment through the lens. Through the semi-transparent and semi-reflective lens, the user can superpose the image displayed on the lens with the surrounding environment, so as to enhance the visual effect of the display. As illustrated in FIG. 1, a virtual object 300 is an image superimposed on the real world observed by the user when wearing the first user equipment 100. As even another embodiment, when the first user equipment 100 is a mobile device, the user can enhance the visual effect of the display through the screen of the mobile device. As illustrated in FIG. 2, the image of the real scene displayed on the display screen of the mobile terminal is collected by the camera of the mobile terminal. The virtual object 300 displayed on the display screen is the image displayed by the mobile terminal on the display screen. When the user holds the mobile terminal, the virtual object 300 superimposed on the real scene can be observed through the display screen.

In addition, the implementation of the second user equipment 200 may refer to the implementation of the first user equipment 100.

Referring to FIG. 3, FIG. 3 illustrates a data processing method provided in an embodiment of the disclosure. The data processing method is applied to the augmented reality system. In the method provided in the embodiment of the disclosure, an execution subject of the method is the first user equipment. The method may begin from block S301 to block S302.

At the block S301: displaying at least one virtual object in a display area of the first display screen.

Specifically, the virtual object is a virtual object determined based on the user's selection, and the first display screen can use the above semi-transparent and semi-reflective lens. When observing the image corresponding to the virtual object displayed on the first display screen, the user can obtain the augmented reality display effect after the virtual object is superimposed with the current scene. The implementation of the virtual object determined based on the user's selection can refer to the subsequent embodiments, which will not be repeated here.

At the block S302: triggering the at least one virtual object to move toward the second user equipment so that the second user equipment, in response to the at least one virtual object moves into an observation area of the second user equipment, displays the at least one virtual object in a display area of the second display screen.

Specifically, the observation area of the second user equipment may be the corresponding field of view of the user when the user wears the second user equipment, and the observation area can be determined according to the corresponding viewing area of the camera of the second user equipment. If the virtual object enters the viewing area, indicating that the user wearing the second user equipment can see the virtual object, the second user equipment displays the virtual object in the display area of the second display screen so that the user can see the superimposed virtual object in the current scene through that second display screen.

The augmented reality system corresponds to a virtual world space. When the user wears the user equipment, the virtual object displayed by the user equipment is located in the virtual world space. The coordinate system of the virtual world space can correspond to the same real scene as the coordinate system of the current scene where the augmented reality system is located.

When the first user equipment triggers the virtual object to move towards the second user equipment, the virtual object moves in the virtual world space. When wearing the user equipment, the user in the real scene can observe the virtual object moving towards the second user equipment in the current scene.

As an implementation, the second user equipment predetermines the position of the observation area in the space of the current scene, and the second user equipment can obtain the position of the virtual object in the space of the current scene, so as to determine whether the virtual object reaches the observation area.

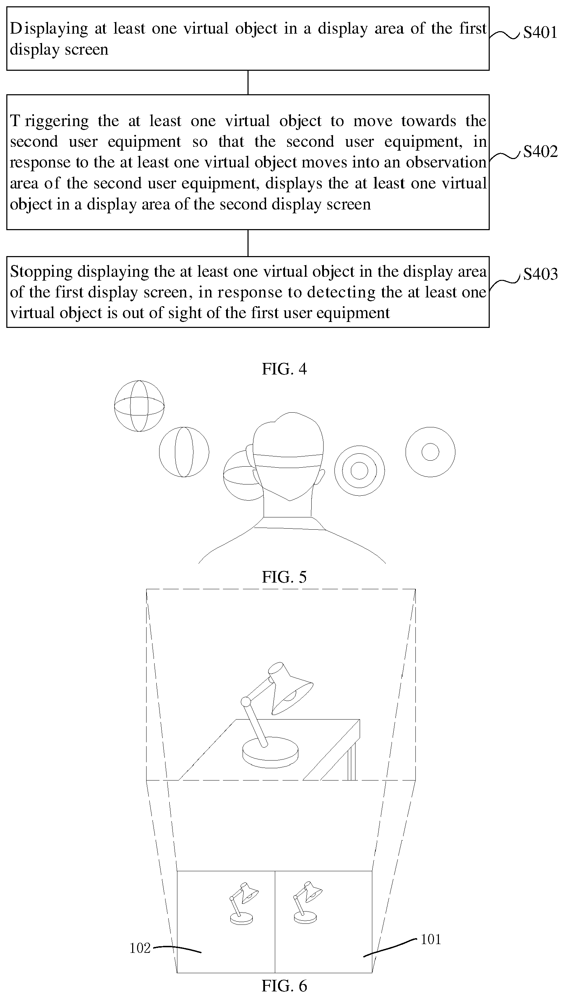

Referring to FIG. 4, FIG. 4 illustrates a data processing method provided in an embodiment of the disclosure. The data processing method is applied to the augmented reality system. In the method provided in the embodiment of the disclosure, an execution subject of the method is the first user equipment. The method may begin from block S401 to block S403.

At the block S401: displaying at least one virtual object in a display area of the first display screen.

As an implementation, the user inputs a display instruction to the first user equipment, and the user may be the user wearing the first user equipment and be recorded as a main operation user.

There are many ways for the main operation user to input the display instruction. Specifically, the display instruction may include a voice instruction, an operation gesture and a display instruction input via a prop provided with a marker.

As an implementation, the display instruction may be the voice instruction, and the first user equipment is disposed with a sound acquisition device, such as a microphone. The first user equipment is configured to collect voice information input by the user, recognize the voice information to extract keywords in the voice information, and find out whether specified keywords are included in the keywords. If the specified keywords are included, multiple virtual objects to be selected are displayed in the specified coordinate system. As illustrated in FIG. 5, when the main operation user wears the first user equipment, after inputting the display instruction, the main operation user sees multiple virtual objects to be selected in the spatial coordinate system, and the user selects a virtual object from multiple virtual objects to be selected. Each displayed virtual object to be selected is correspondingly displayed with an identification. After the user inputs the voice corresponding to the identification, the first user equipment determine the virtual object selected by the user as the virtual object that needs to move into the specified coordinate system this time.

As another implementation, the display instruction may be the operation gesture. Specifically, when wearing the first user equipment, the user starts the camera of the first user equipment, and an orientation of the field of view of the camera is the same as an orientation of the field of view of the user. The first user equipment is configured to acquire the image collected by the camera in real time. When the gesture input by the user appears within the collected image, for example, a hand image is detected to be included within the collected image, and then the gesture information corresponding to the hand image is detected. The gesture information may include hand movement trajectory and hand motion, etc. Among them, the hand motion may include finger motions, such as raising the thumb or holding both fingers in a V-shape. If the gesture information matches the preset display gesture, it is determined that the display instruction is acquired, and then the multiple virtual objects to be selected are displayed in the specified coordinate system, as illustrated in FIG. 5.

As still another implementation, the display instruction may be the display instruction input via the prop provided with the marker. Specifically, the marker may be an object with a specific pattern. When recognizing the marker, the user equipment determines that the display instruction input by the user is acquired.

At the block S402: triggering the at least one virtual object to move towards the second user equipment so that the second user equipment, in response to the at least one virtual object moves into an observation area of the second user equipment, displays the at least one virtual object in a display area of the second display screen.

The virtual object corresponds to a motion trajectory. When the at least one virtual object is triggered to move towards the second user equipment, the at least one virtual object moves according to the motion trajectory in the specified space.

The specified space can be a virtual world space based on the current real-world space, and the coordinate system corresponding to the specified space is the specified spatial coordinate system (also referred to as specified coordinate system).

The specified coordinate system is a spatial coordinate system with the first user equipment as an origin, and the specified coordinate system corresponds to the virtual world space of the augmented reality system. The specified coordinate system is configured as the virtual world coordinate system of the augmented reality system, and the virtual objects in the augmented reality system are displayed and moved in the specified coordinate system. The user equipment can scan the surrounding environment to complete the establishment of the specified coordinate system. As an implementation, the user equipment is configured to acquire a video of the surrounding environment, extract key frames from the video of the camera and feature points from the key frames, and finally generates a local map. The feature points are configured to represent reference position points in the real world of the surrounding environment, and the field of view of the user equipment in the real world can be determined based on the feature points. For example, when the user wears the user equipment, the user equipment includes a camera, an orientation of the camera is the same as an orientation of the user's eyes, the camera can collect images of the surrounding environment, and then can collect feature points in the surrounding environment, so that the user equipment can determine the orientation of the user.

In addition, when the target user wearing the second user equipment is located in the specified coordinate system, the user wearing the first user equipment can see the virtual object and the target user in the specified coordinate system. In order to facilitate the description of this scheme, the user wearing the first user equipment is named as the main operation user.

As an implementation, the main operation user may instruct the first user equipment to display the virtual object in the specified coordinate system. For example, the main operation user selects a virtual object in the virtual world space of the augmented reality system (i.e., in the specified coordinate system) and makes the virtual object move in the specified coordinate system.

As an implementation, when wearing the first user equipment, the virtual object displayed on the first display screen of the first user equipment and the real world seen through the first display screen are simultaneously observed by the user, so as to the augmented reality effect is observed after the superposition of the virtual object and the real world. Therefore, the first user equipment displays the moving virtual object on the first display screen, and what the user observes in the specified coordinate system is that the virtual object moves in the real world, that is, moves in the specified coordinate system.

The motion trajectory of the virtual object is preset. Specifically, a trajectory table is preset, which includes identifications of multiple virtual objects and the motion trajectory corresponding to each identification. After the virtual object is selected, the preset motion trajectory corresponding to the virtual object is found in the trajectory table.

Moreover, the virtual object can be launched into the specified coordinate system by the user. As an implementation, after acquiring the virtual object selected by the user and configuring the preset trajectory for the virtual object, the user equipment will launch the virtual object into the specified coordinate system, that is, into the space of the augmented reality system, so that the user can see that the virtual object being launched into the current space and moving along the preset trajectory when wearing the user equipment. In addition, the moving speed can also be set for the virtual object.

As another implementation, the user can input a launch gesture as a start instruction to launch the virtual object. Specifically, the captured image collected by the camera of the first user equipment is acquired, and the gesture information determined based on the captured image is matched with the preset launch gesture, then the user input launch gesture is determined. For example, the first user equipment displays multiple virtual objects to be selected in front of the user's eyes, the user can move the virtual object to be selected by inputting left and right sliding gestures to display the required virtual object to be continued in the area directly in front of the field of view, and then input the forward gesture, for example, may be a push forward gesture, to launch the virtual object. In addition, the moving speed corresponding to the gesture speed of the virtual object may also be set according to the gesture speed of the launch gesture.

Since the virtual object can move in the specified coordinate system, the position of the virtual object in the specified coordinate system is also changing with the movement of the virtual object, and the position of the virtual object in the specified coordinate system can correspond to the position point in the space where the current real environment is located. The virtual object is displayed on the second user equipment when the location point of the virtual object is located in the observation area relative to the target user.

As an implementation, when the motion trajectory of the virtual object is determined by the first user equipment, the determined virtual object and the motion trajectory corresponding to the virtual object are sent to the second user equipment, so that the first user equipment and the second user equipment synchronize the information corresponding to the virtual object.

It should be noted that there is a mapping relationship between the display position of the virtual object in the space where the augmented reality system is located and the display position of the virtual object on the display screen of the user equipment. For example, the virtual object needs to be displayed at position A in the specified coordinate system, that is, the user can see a virtual object displayed at position A in space when wearing the user equipment, and the display position on the display screen corresponding to the position A is position B. When the virtual object is displayed at position B of the display screen of the user equipment, the user can see a virtual object displayed at position A through the display screen.

As illustrated in FIG. 6, there is a table in the real world. If a lamp needs to be displayed on the desktop of the table, it is necessary to determine the position of the table within the spatial coordinate system, i.e., the specified coordinate system, then find the corresponding relationship between the position of the desktop and the pixel coordinates in the pixel coordinate system based on the mapping relationship between the pixel coordinate system of the display screen and the specified coordinate system, so as to find the display position on the display screen corresponding to the position of the desktop, and then display the image corresponding to the virtual object at the display position. As illustrated in FIG. 6, the user's view through the display screen is the real-world desktop with a desk lamp is displayed on the desktop. In addition, in order to achieve a three-dimensional effect, the display screen may include a left screen 102 and a right screen 101. The left virtual body image corresponding to the desk lamp is displayed on the left screen 102 and the right virtual body image corresponding to the desk lamp is displayed on the right screen 101. When observed by human eyes, the two images are superimposed to form a three-dimensional image corresponding to the desk lamp and displayed on the desktop.

Therefore, after the first user equipment and the second user equipment synchronize the virtual object and the corresponding motion trajectory, the first user equipment and the second user equipment can respectively determine the display position points on the display screen corresponding to each position point on the motion trajectory of the virtual object in the specified coordinate system based on the corresponding relationship between the predetermined specified coordinate system and the pixel coordinate system of the display screen, so that the first user equipment and the second user equipment see the effect of the motion of the virtual object in space at the same time. Although each sees a different angle, the position of the virtual object moving in space does not differ depending on the viewing angle of different equipment, which simulates the real effect of multiple people viewing the same virtual object at the same time.

At the block S403: stopping displaying the at least one virtual object in the display area of the first display screen, in response to detecting the at least one virtual object is out of sight of the first user equipment.

Specifically, the sight of the first user equipment can be an area range predetermined in the above specified coordinate system. When the virtual object is displayed in the virtual world space, the display position of the virtual object corresponds to a coordinate point in the specified coordinate system. After the first user equipment determines the coordinate point, it can determine whether the coordinate point of the virtual object is within the area range, so that it can determine that the virtual object is not within the sight of the first user equipment.

The virtual object is not within the sight of the first user equipment, which may include that the virtual object is blocked and the virtual object is not within the viewing range of the camera of the user equipment.

As an implementation, the virtual object is not within the sight of the first user equipment, which may be that the virtual object is not within the viewing range of the camera. When the second user equipment judges whether the at least one virtual object is located within the viewing range of the camera of the first user equipment; if it is not located within the viewing range, it determines that the at least one virtual object is not within the sight of the first user equipment.

Among them, the viewing range of the camera can also be determined according to the position of the feature points in the image collected by the camera in the spatial coordinate system of the current scene, such that the viewing range of the camera can be mapped to the specified coordinate system, then the position point of the virtual object when moving in the specified coordinate system can be obtained to determine whether the position point is within the viewing range of the camera, and thus determining that the virtual object is not within the sight of the first user equipment.

In addition, an implementation in which the virtual object is blocked can be introduced in subsequent embodiments.

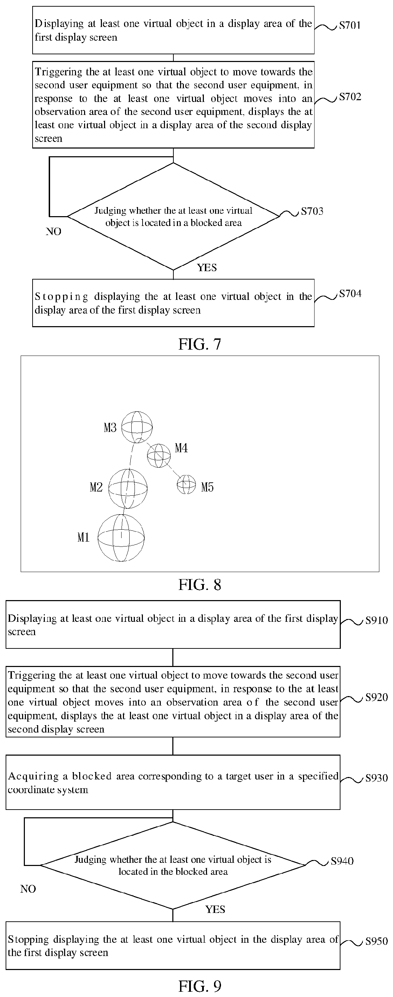

Referring to FIG. 7, FIG. 7 illustrates a data processing method provided by an embodiment of the disclosure, and the method is applied to the augmented reality system. In the method provided by the embodiment of the present disclosure, an execution subject of the method is the first user equipment. The method may begin from block S701 to block S704.

At the block S701: displaying at least one virtual object in a display area of the first display screen.

At the block S702: triggering the at least one virtual object to move toward the second user equipment so that the second user equipment, in response to the at least one virtual object moves into an observation area of the second user equipment, displays the at least one virtual object in a display area of the second display screen.

At the block S703: judging whether the at least one virtual object is located in a blocked area.

Specifically, the blocked area can be the position area in the specified coordinate system. Since the virtual object can move in the specified coordinate system, the position of the virtual object in the specified coordinate system is also changing with the movement of the virtual object, and the position of the virtual object in the specified coordinate system can correspond to the position point in the space where the current real environment is located. When the position point of the virtual object is in the blocked area, the virtual object will be blocked by the target user.

If the first user equipment stops displaying the virtual object in the first display screen, the user cannot see the virtual object superimposed in the specified coordinate system through the first display screen, thus allowing the main operation user to observe the visual effect that the virtual object cannot be observed due to being blocked by the target user.

As an implementation, the blocked area is a blocked area corresponding to the target user in the specified coordinate system, and the target user is a user wearing the second user equipment. The first user equipment and the second user equipment are located in the specified coordinate system, and the specified coordinate system is a spatial coordinate system with the first user equipment as an origin.

In addition, after stopping displaying the virtual object in the first display screen of the first user equipment, the second user equipment can also be instructed to display the moving virtual object in the second display screen, so that the target user can observe the virtual object in the specified coordinate system.

As an implementation, the first user equipment and the second user equipment are pre-aligned by aligning their respective coordinate systems so that the field of view of both the first user equipment and the second user equipment corresponds to the area in the specified coordinate system, that is, the area visible to the user in the specified coordinate system while wearing the first user equipment and the area visible to the user in the specified coordinate system while wearing the second user equipment can be determined in advance by repositioning of the first user equipment and the second user equipment.

The first user equipment and the second user equipment can map the coordinate system of the first user equipment and the coordinate system of the second user equipment to the same coordinate system through coordinate alignment. Specifically, the first user equipment scans the current scene where the augmented reality system is located according to the first camera to obtain the first scanning data. The first scanning data may include the position and depth information corresponding to multiple feature points in the space of the current real scene. Specifically, the first user equipment includes a camera, which scans the space of the current real scene to obtain the scanning data, establishes the specified coordinate system according to the first scanning data, and sends the specified coordinate system to the second user equipment so that the second user equipment aligns the established coordinate system with the specified coordinate system after establishing the coordinate system according to the second scanning data obtained by the second camera scanning the current scene where the augmented reality system is located.

As an implementation, the camera of the first user equipment is a monocular camera, the video data of the current scene collected by the first camera is obtained. The video data is processed to obtain the position information and depth information of multiple feature points in the current scene. For example, if the video frame data includes multiple images containing feature points, the depth information of the feature point is obtained through multiple images corresponding to the feature points.

As another implementation, the camera of the first user equipment is a multi-camera. For example, the camera of the first user equipment can be a binocular camera that acquires the image data of the current scene collected by the first camera; processes the image data to obtain the position information and depth information of multiple feature points in the current scene. Specifically, since the image is taken by the binocular camera, the image contains the depth information of each feature point, so that the depth information corresponding to the feature point can be determined by analyzing the image.

Each coordinate point in the specified coordinate system corresponds to position information and depth information. Specifically, the depth information can be a value in the z-axis direction of the specified coordinate system, and the position information can be on the plane of the XY axis of the specified coordinate system.

Specifically, the first user equipment scans the surrounding environment, thus completing the establishment of the specified coordinate system, the user equipment acquires the video of the surrounding environment, extracts key frames from the video of the camera and extracts feature points from the key frames, and finally generates a local map. The feature point is used to represent the reference position point in the real world of the surrounding environment, and the field of view of the user equipment in the real world can be determined based on the feature point. For example, when the user wears the user equipment, the user equipment includes a camera, and the shooting direction of the camera is consistent with the orientation of the user's eyes. The camera can collect the image of the surrounding environment, and then can collect the feature points in the surrounding environment, so that the user equipment can determine the orientation of the user.

After the first user equipment completes the scanning of the surrounding environment and generates a local map, the second user equipment also scans the surrounding environment and matches the feature points extracted by the first user equipment with the feature points extracted by the second user equipment, and if the matching is successful, it is considered that the reposition of the first user equipment and the second user equipment is successful. After the first user equipment determines the virtual object, it can obtain the preset motion trajectory corresponding to the virtual object, so as to determine each position point when the virtual object moves in the specified coordinate system, where each position point is used as the trajectory point of the preset motion trajectory. As illustrated in FIG. 8, the sphere is a virtual object, in which multiple spheres displayed are the same virtual object. In order to facilitate the description of multiple trajectory points corresponding to the virtual object, multiple spheres are drawn in FIG. 8. Among them, positions M1, M2, M3, M4 and M5 in FIG. 8 are the trajectory points of the virtual object, and move from the position of M1 to the position of M5. In addition, in order to enable the user to observe the virtual object moving from near to far when observing the virtual object, the image displayed on the display screen of the virtual object at the position of M1 is larger than that displayed on the display screen of the virtual object at the position of M5.

The motion trajectory of the virtual object in the specified coordinate system is synchronized within the first user equipment and the second user equipment, that is, both the first user equipment and the second user equipment know the current position of the virtual object within the specified coordinate system, such that when the virtual object enters the field of view of the first user equipment and the second user equipment, the first user equipment and the second user equipment each render the virtual object so that the user wearing the first user equipment and the user wearing the second user equipment can see the virtual object.

Referring to the foregoing description on the coordinate alignment of the first user equipment and the second user equipment, the area corresponding to the field of view of the first user equipment in the specified coordinate system is the first area, and the area corresponding to the field of view of the second user equipment in the specified coordinate system is the second area. Since the first user equipment and the second user equipment obtain the spatial position corresponding to the field of view in advance, when the user equipment obtains the position of the virtual object in the specified coordinate system, it can determine whether the virtual object falls within its own field of view, that is, whether it is necessary to render the virtual object.

In addition, after obtaining the moving speed and trajectory of the virtual object, each trajectory of the virtual object in the specified coordinate system can correspond to time.

At the block S704: stopping displaying the at least one virtual object in the display area of the first display screen.

As an implementation, after the first user equipment stops displaying the virtual object in the display area of the first display screen, the second user equipment may continue to display the virtual object, thereby enabling the virtual object to be blocked by the user wearing the second user equipment at exactly the time when the virtual object comes into the sight of the user wearing the second user equipment.

As an implementation, the blocked area is the observation area of the second user equipment, that is, the range of the blocked area is the same as that of the observation area of the second user equipment.

When the positional relationship between the virtual object and the target user meets the blocking conditions in the specified coordinate system, that is, when the virtual object enters the blocked area, stop displaying the virtual object within the first display screen and instruct the second user equipment to display the moving virtual object within the second display screen, so that the virtual object continues to move within the specified coordinate system according to the preset motion trajectory.

When the first user equipment detects that the positional relationship between the virtual object and the target user meets the blocking conditions, it obtains the position of the virtual object in the specified coordinate system at the current time as the blocked point.

The blocked point is sent to the second user equipment to instruct the second user equipment to display the image of the virtual object moving from the first position of the second display screen to the second position within the second display screen, where the first position corresponds to the blocked point, and the second position corresponds to the end point of the preset motion trajectory.

The first user equipment sends the blocked point to the second user equipment, so that the second user equipment can determine that the virtual object is blocked at the position of the blocked point.

In addition, the motion trajectory of the virtual object in the specified coordinate system corresponds to the starting point and ending point. As an implementation, the starting point may be the position point of the virtual object in the specified coordinate system when the virtual object is launched by the first user equipment. Referring to the above embodiment, for the first user equipment and the second user equipment, each position point of the virtual object in the specified coordinate system can correspond to the position point on the display screen of the user equipment. Therefore, according to the mapping relationship between the preset pixel coordinate system of the display screen and the specified coordinate system, the first position corresponding to the blocked point and the second position corresponding to the end point of the preset motion trajectory are determined, and the second user equipment displays the image of the virtual object on the second display screen and displays the animation of virtual object moving from the first position to the second position. Thus, the user wearing the second user equipment can observe that the virtual object continues to move to the end point along the preset motion trajectory from the position of the blocked point.

Therefore, when in use, if the position and viewing angle between the user wearing the first user equipment and the user wearing the second user equipment are reasonably set, the virtual object is blocked by the user wearing the second user equipment within the specified coordinate system at exactly the time when the virtual object first enters the field of view of the second user equipment. For example, if the field of view of the first user equipment and the field of view of the second user equipment are facing the same direction, after the first user equipment stops rendering, the user wearing the first user equipment observes the visual effect that the virtual object cannot be seen because it is blocked by the second user, while the user wearing the second user equipment can see the virtual object continue to move along the preset trajectory at this time, which has a good interactive effect.

In addition, it should be noted that in addition to the above method of determining the motion trajectory of the virtual object, the first user equipment can automatically generate the motion trajectory according to the position of the target user after selecting the virtual object. Specifically, the target position of the second user equipment within the specified coordinate system and the initial position of the first user equipment within the specified coordinate system are acquired; the motion trajectory of the virtual object is set based on the initial position and the target position; and the virtual object moving towards the second user equipment according to the motion trajectory is triggered.

The initial position of the first user equipment within the specified coordinate system can be the origin position of the specified coordinate system or a position point set in the specified coordinate system in advance. The implementation of determining the target position in the specified coordinate system can refer to the above embodiment and will not be repeated here. The initial position can be used as the starting point of the motion trajectory and the target position can be used as the end point of the motion trajectory, so that the motion path of the virtual object within the specified coordinate system can be determined, that is, the motion trajectory can be determined.

Referring to FIG. 9, FIG. 9 illustrates a data processing method provided in an embodiment of the disclosure, and the data processing method is applied to the augmented reality system. In the method provided in the embodiment of the disclosure, an execution subject of the method is the first user equipment. The method may begin from block S910 to block S930.

At the block S910: displaying at least one virtual object in the display area of the first display screen.

At the block S920: triggering the at least one virtual object to move toward the second user equipment so that the second user equipment, in response to the at least one virtual object moves into an observation area of the second user equipment, displays the at least one virtual object in a display area of the second display screen.

At the block S930: acquiring a blocked area corresponding to a target user in the specified coordinate system.

In the specified coordinate system established with the first user equipment, if the target user is located within the specified coordinate system, the target user is located in the field of view of the first user equipment, the target user can block the field of view of the first user equipment, that is, in the specified coordinate system, the target user corresponds to one blocked area. The blocked area may be determined by determining the positions of the target user and the first user equipment within the specified coordinate system, and taking the area behind the target user in the direction of the first user equipment pointing to the target user as the blocked area.

The positions of the target user and the first user equipment in the specified coordinate system can be determined when the first user equipment and the second user equipment scan the surrounding environment. Specifically, the first user equipment and the second user equipment respectively capture the surrounding images, the size and angle of the same feature point of the surrounding environment in the first user equipment and the second user equipment are different, so that the distance and angle of the first user equipment and the second user equipment relative to the feature point can be determined. If the position of the feature point in the specified coordinate system is determined, the positions of the first user equipment and the second user equipment in the specified coordinate system can be determined according to the coordinates of the feature point.

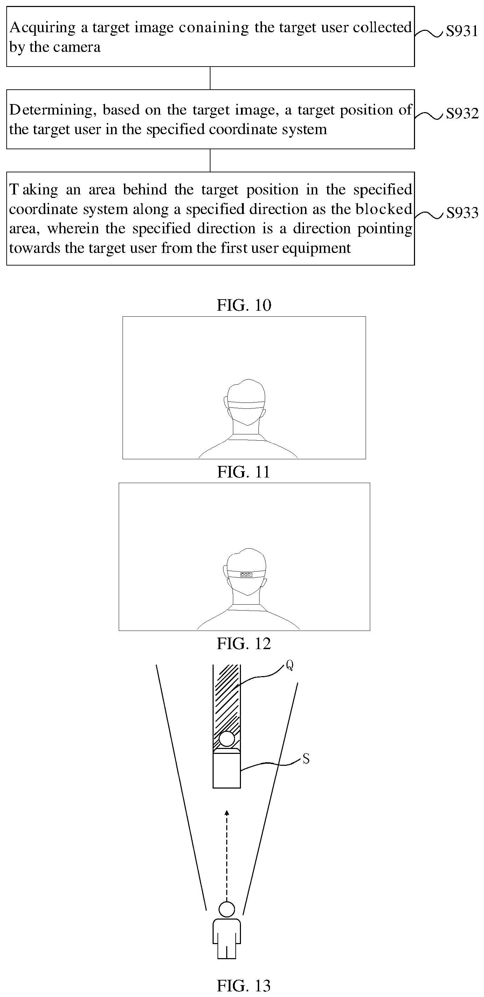

As an implementation, each of the first user equipment and the second user equipment is disposed with a camera, the specific embodiment of acquiring the blocked area corresponding to the target user in the specified coordinate system can refer to FIG. 10, and the block S930 may include block S931 to block S933.

At the block S931: acquiring a target image containing the target user collected by the camera.

Specifically, the field of view of the camera of the first user equipment and the field of view of the user wearing the first user equipment are facing the same direction, that is, the scene observed by the user can be collected by the camera of the first user equipment, so that the camera can simulate the user's visual angle and acquire the scene observed by the user.

As an implementation, the field of view of the target user is oriented in the same direction as that of the first user equipment. As illustrated in FIG. 11, the image illustrated in FIG. 11 is the image captured by the first user equipment. The first user equipment captures the back of the target user's head, and it can be seen that the field of view of the target user is oriented in the same direction as the depth direction of the camera of the first user equipment. Therefore, if the field of view of the target user is oriented in the same direction as the depth direction of the camera of the first user equipment, it is determined that the field of view of the target user is oriented in the same direction as the field of view of the first user equipment.

As an implementation, in order to meet the user's experience, the first user equipment can judge whether the field of view of the target user is oriented in the same direction as the depth direction of the camera of the first user equipment through the collected image. Specifically, the first user equipment acquires the image collected by the camera and determines whether the image includes a face image. If the face image is not included, it determines that the field of view of the target user is oriented in the same direction as the depth direction of the camera of the first user equipment. If the face image is included, it determines that the field of view of the target user is oriented in different direction than the depth direction of the camera of the first user equipment.

In addition, considering that the field of view of the first user equipment includes a user who is not wearing the user equipment, the user's face image will interfere with the above judgment result of judging whether the field of view of the target user is oriented in the same direction as the depth direction of the camera of the first user equipment. Specifically, the judgment method may also be that the first user equipment acquires the image collected by the camera, finds head contours of human bodies in the image, removes the head contour(s) without wearing user equipment from the head contours, and judges whether the remaining head contour includes face image. If the face image is not included, it determines that the field of view of the target user is oriented in the same direction as the depth direction of the camera of the first user equipment. If the face image is included, it determines that the direction of the field of view of the target user is oriented in different direction than the depth direction of the camera of the first user equipment.

As another implementation, a specified pattern may also be set on the user equipment. When the target user wears the user equipment, if the first user equipment scans the specified pattern, it can be determined that the field of view of the target user is oriented in the same direction as the depth direction of the camera of the first user equipment. Specifically, the specified pattern can be set at the specified position of the user equipment, and the specified position is behind the user's head when the user wears the user equipment.

As illustrated in FIG. 12, the specified pattern is arranged on the outside of the belt of the user equipment. When the camera of the first user equipment captures the specified pattern, it can recognize the specified pattern, so as to determine that the field of view of the target user is oriented in the same direction as the depth of the camera of the first user equipment.

The first user equipment determines that the field of view orientation of the target user is oriented in the same direction as that of the first user equipment, it sends a connection request to the second user equipment to complete the connection between the first user equipment and the second user equipment.

In some embodiments, the specified pattern is used to indicate the connection between the first user equipment and the second user equipment. Specifically, when the camera of the first user equipment captures the specified pattern, it is determined that the field of view of the target user is oriented in the same direction as the depth direction of the camera of the first user equipment, and the connection request is sent to the second user equipment to complete the connection between the first user equipment and the second user equipment, so as to realize the information synchronization between the first user equipment and the second user equipment. The synchronized information may include the coordinate system of the user equipment, device information, the type and speed of the virtual object, etc. In some embodiments, the first user equipment and the second user equipment transmit data through Bluetooth. Specifically, the first user equipment and the second user equipment are paired through the Bluetooth of the device. After the pairing is successful, the two devices can share data through Bluetooth.

At the block S932: determining, based on the target image, a target position of the target user in the specified coordinate system.

Specifically, each object in the image collected by the camera of the first user equipment corresponds to depth information, and the depth information can reflect the distance between the object and the camera. Therefore, the distance information between the target user and the first user equipment is determined according to the target image, and the distance information corresponds to the depth information of the target user in the target image. Then, the target position of the target user in the specified coordinate system is determined according to the distance information.

As an implementation, the mapping relationship between the camera coordinate system of the camera and the spatial coordinate system of the augmented reality system is determined in advance, the position of each position point in the camera coordinate system in the spatial coordinate system can be determined, and the spatial coordinate system corresponds to the specified coordinate system, then the position of each position point in the camera coordinate system in the specified coordinate system can be determined. Therefore, in the target image collected by the camera, the target position of the target user in the specified coordinate system can be determined according to the position point of the target user's image in the camera coordinate system.

At the block S933: taking an area behind the target position in the specified coordinate system along a specified direction as the blocked area, where the specified direction is a direction pointing towards the target user from the first user equipment.

After determining the target position of the target user in the specified coordinate system, the area behind the target position in the direction is determined as the blocked area according to the direction pointing towards the target user from the first user equipment. As an implementation, the blocked area can be determined according to the binary space partition method.

Specifically, binary space partitioning (BSP) tree is another type of space partition technology. It is used for world-object collision detection. Traversal of BSP tree is a basic technology of using BSP. Collision detection essentially reduces the traversal or search of the tree. Because this method can exclude a large number of polygons in the early stage, it only detects the collision of a few faces. Specifically, the method of finding the partition surface between two objects is suitable for judging whether two objects intersect. If the partition surface exists, there is no collision. Therefore, recursively traverse the world tree and judge whether the partition surface intersects with the bounding sphere or bounding box. The accuracy can also be improved by detecting the polygon of each object. One of the easiest ways to do this detection is to test whether all parts of the object are on one side of the partition surface. The Cartesian plane equation ax + by + cz + d = 0 is used to judge which side of the plane the point is located on. If the equation is satisfied, the point is on the plane; if ax + by + cz + d > 0, the point is on the front of the plane; and if ax + by + cz + d < 0, the point is on the back of the plane.

One important thing to note when the collision does not occur is that an object (or its bounding box) must be on the front or back of the partition surface. If there are vertices on the front and back of the plane, the object intersects the plane.

Therefore, a plane can be determined, and then the blocked area can be determined according to the plane. As illustrated in FIG. 13, the direction indicated by the arrow is the direction along which the first user equipment points to the target user. Along this direction, a plane S perpendicular to the direction indicated by the arrow is determined at the position of the target user, and the area behind the plane S is the blocked area Q. That is, the projection of each position point in the blocked area on the plane where the plane S is located is located in the area corresponding to the plane S, and the depth information is greater than the depth information at the position of the target user.

At the block S940: judging whether the at least one virtual object is located in the blocked area.

At the block S950: stopping displaying the at least one virtual object in the display area of the first display screen, in response to detecting the at least one virtual object enters the blocked area, and instructing the second user equipment to display the moving virtual object in the second display screen, so that the virtual object continues to move according to a preset motion trajectory in the specified coordinate system.

As an implementation, the spatial coordinates corresponding to each trajectory point when the virtual object moves according to the preset motion trajectory in the specified coordinate system are obtained. Specifically, the embodiment of obtaining the spatial coordinates corresponding to each trajectory point when the virtual object moves according to the preset motion trajectory in the specified coordinate system is to obtain the initial trajectory of the virtual object in the display area of the first display screen; according to the predetermined mapping relationship between the pixel coordinates in the display area of the first display screen and the spatial coordinates in the specified coordinate system, determine the trajectory points in the specified coordinate system corresponding to each position point in the initial trajectory of the virtual object, and multiple the trajectory points constitute the preset motion trajectory. According to the introduction of the above embodiment, each trajectory point of the virtual object in the specified coordinate system can be determined when the motion trajectory is preset, which will not be repeated here.

When it is detected that the spatial coordinates of the current motion trajectory of the virtual object is located in the blocked area in the specified direction, it is determined that the virtual object enters the blocked area; the display of the virtual object in the first display screen is stopped.

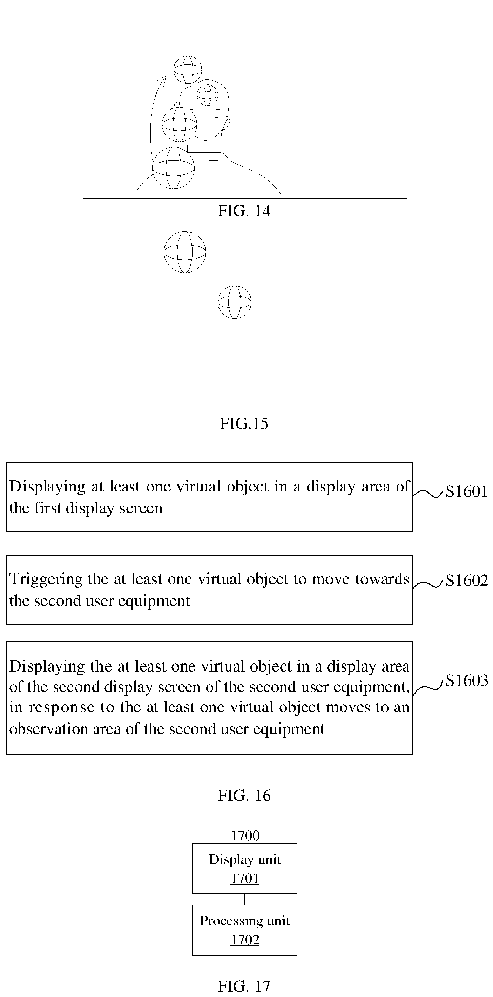

Specifically, take FIGS. 14 and 15 as examples to illustrate the above process of blocking and display. Specifically, refer to FIG. 14, the person in FIG. 14 is the target user, that is, the user wearing the second user equipment, and the screen shown in FIG. 14 is the scene observed by the user wearing the first user equipment. The user wearing the first user equipment observes that the virtual object (i.e., the sphere in the figure) moves to the top of the target user with a parabolic trajectory in the current space, then the virtual object falls into the eyes of the target user, thus being blocked by the target user, and the first user equipment stops rendering the virtual object. The sphere drawn by the broken line in FIG. 14 cannot be seen by the user wearing the first user equipment, the broken line is used to compare the virtual object at M4 position in FIG. 8, and the virtual objects at positions M4 and M5 positions are not displayed on the display screen of the first user equipment, because the virtual objects at positions M4 and M5 positions enter the blocked area.

The position point corresponding to the virtual object at position M4 is used as the position point of the virtual object within the specified coordinates, that is, the blocked point, when the position relationship between the virtual object and the target user meets the blocking conditions, the second user equipment continues to render the virtual object from the blocked point. As illustrated in FIG. 15, FIG. 15 is the scene observed within the field of view of the target user i.e., the user wearing the second user equipment. As illustrated in FIG. 15, the virtual object continues to move from position M4 to stop at position M5.

In addition, considering that when the position of the first user equipment changes, the displayed virtual object, the motion trajectory of the virtual object and the blocked area will change. When it is detected that the position of the first user equipment in the current scene where the augmented reality system is located changes, the specified coordinate system is changed according to the modified position, and perform the operation of obtaining the blocked area corresponding to the target user in the specified coordinate system again. The change of the position of the first user equipment can be determined according to the image collected by the first user equipment. For example, when the change data of the image of the specified object in the image meets the specified change conditions compared with the previous frame image in the collected image, it is determined that the position of the first user equipment is changed. As an implementation, the specified object may be a calibration object in the current scene. The change data can be the coordinate position or contour area of the image of the calibration object in the captured image.

After changing the specified coordinate system, the position point of the virtual object in the specified coordinate system will change, and the position of the blocked area in the specified coordinate system will also change. Then, the first user equipment will send the updated specified coordinate system to the second user equipment again, so that the coordinate systems of the first user equipment and the second user equipment are realigned, and continue to implement the above method.

Referring to FIG. 16, FIG. 16 illustrates a data processing method provided by an embodiment of the disclosure, and the data processing method is applied to the above augmented reality system. In the method provided by the embodiment of the disclosure, the method is an interactive process between the first user equipment and the second user equipment. The method may begin from block S1601 to block S1603.

At the block S1601: displaying at least one virtual object in a display area of the first display screen.

At the block S1602: triggering the at least one virtual object to move towards the second user equipment.

At the block S1603: displaying the at least one virtual object in a display area of the second display screen of the second user equipment, in response to the at least one virtual object moves into an observation area of the second user equipment.

It should be noted that the above-mentioned embodiments of the block S1601 to the block S1603 can be referred to the previous embodiments and will not be repeated here.

Referring to FIG. 17, FIG. 17 illustrates a structural block diagram of a data processing apparatus 1700 provided by an example useful for understanding the invention but outside the scope of the invention as claimed. The data processing apparatus may include a display unit 1701 and a processing unit 1702.

The display unit 1701 is configured to display at least one virtual object in a display area of the first display screen.

The processing unit 1702 is configured to trigger the at least one virtual object to move towards the second user equipment, so that the second user equipment, in response to the at least one virtual object moves to the observation area of the second user equipment, displays the at least one virtual object in the display area of the second display screen.

It will be clear to those skilled in the field that, for the convenience and simplicity of the description, the specific working processes of the above-described apparatus and modules can be referred to the corresponding processes in the previous method embodiments and will not be repeated here.

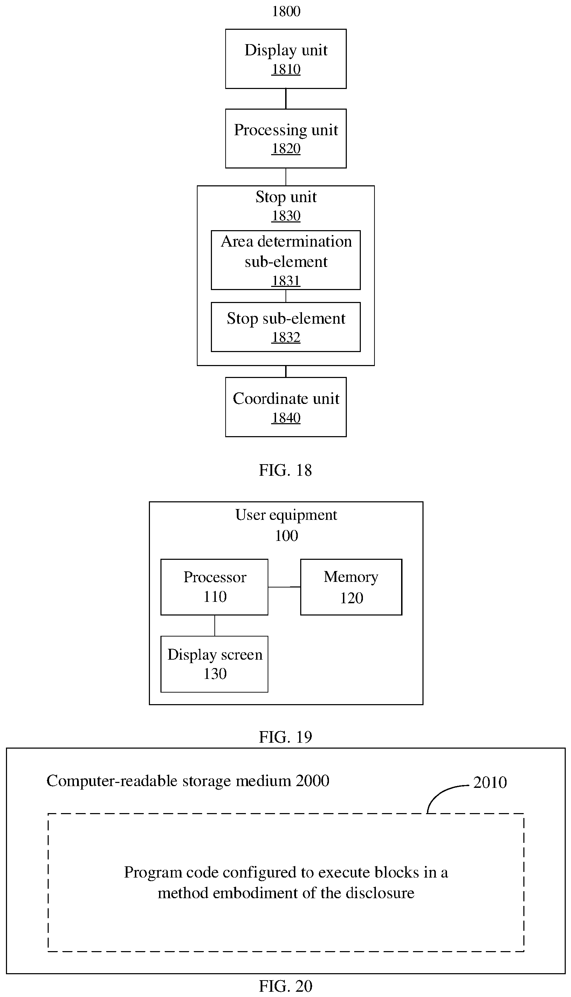

Referring to FIG. 18, FIG. 18 illustrates a structural block diagram of a data processing apparatus 1700 provided by an example useful for understanding the invention but outside the scope of the invention as claimed. The data processing apparatus may include a display unit 1810, a processing unit 1820, a stop unit 1830, and a coordinate unit 1840.

The display unit 1810 is configured to display at least one virtual object in the display area of the first display screen.

The display unit 1810 is configured to display a moving virtual object in the first display screen based on the user's selection, and the virtual object corresponds to a preset motion trajectory in the specified coordinate system.

The processing unit 1820 is configured to trigger the at least one virtual object to move towards the second user equipment so that the second user equipment, in response to the at least one virtual object moves into the observation area of the second user equipment, displays the at least one virtual object in the display area of the second display screen.

The stop unit 1830 is configured to stop displaying the virtual object in the display area of the first display screen, in response to detecting the at least one virtual object is not within the sight of the first user equipment.

In at least one embodiment, the stop unit 1830 is configured to determine whether the at least one virtual object is within the viewing range of the camera of the first user equipment; if it is not within the viewing range, it is determined that the at least one virtual object is not within the sight of the first user equipment.

In at least one embodiment, the stop unit 1830 is also configured to determine whether the at least one virtual object is located in the blocked area; if it is located in the blocked area, it is determined that the at least one virtual object is not within the sight of the first user equipment.

In at least one embodiment, the stop unit 1830 is also configured to obtain the blocked area corresponding to the target user in the specified coordinate system, and the target user is a user wearing the second user equipment.

The stop unit 1830 may include an area determination sub-element 1821 and a stop sub-element 1822. The area determination sub-element 1831 is configured to obtain the blocked area corresponding to the target user in the specified coordinate system.

In at least one embodiment, the area determination sub-element 1821 is also configured to obtain the target image including the target user collected by the camera; determine the target position of the target user in the specified coordinate system according to the target image; take the area behind the target position in the specified coordinate system along the specified direction as the blocked area, and the specified direction is the direction pointing towards the target user from the first user equipment.

In at least one embodiment, the area determination sub-element 1821 is also configured to determine the distance information between the target user and the first user equipment according to the target image; and determine the target position of the target user in the specified coordinate system according to the distance information.

The stop sub-element 1822 is configured to stop displaying the virtual object in the first display screen, in response to detecting the virtual object enters the blocked area.

In at least one embodiment, the stop sub-element 1822 is also configured to obtain the spatial coordinates corresponding to each trajectory point when the virtual object moves according to the preset motion trajectory in the specified coordinate system; determine that the virtual object enters the blocked area when it is detected that the spatial coordinate of the current motion trajectory of the virtual object is located in the blocked area in the specified direction; and stop displaying the virtual object in the first display screen.

In at least one embodiment, the stop sub-element 1822 is also configured to obtain the initial trajectory of the virtual object in the display area of the first display screen; according to the predetermined mapping relationship between the pixel coordinates in the display area of the first display screen and the spatial coordinates in the specified coordinate system, determine the trajectory points in the specified coordinate system corresponding to each position point in the initial trajectory of the virtual object, and multiple the trajectory points constitute the preset motion trajectory.

The coordinate unit 1840 is configured to scan the current scene where the augmented reality system is located according to the first camera to obtain the first scanning data; establish the specified coordinate system according to the first scanning data, send the specified coordinate system to the second user equipment, so that the second user equipment aligns the established coordinate system with the specified coordinate system after establishing the coordinate system according to the second scanning data obtained by the second camera scanning the current scene where the augmented reality system is located.

In at least one embodiment, the coordinate unit 1840 is also configured to obtain the video data of the current scene collected by the first camera; process the video data to obtain the position and depth information of multiple feature points in the current scene, and the position and depth information of the multiple feature points are used as the first scanning data.

In at least one embodiment, the coordinate unit 1840 is also configured to obtain the image data of the current scene collected by the first camera; process the image data to obtain the position and depth information of multiple feature points in the current scene, and the position and depth information of the multiple feature points are used as the first scanning data. It will be clear to those skilled in the field that, for the convenience and simplicity of the description, the specific working processes of the above-described apparatus and modules can be referred to the corresponding processes in the previous method embodiments and will not be repeated here.

In several embodiments provided in the present disclosure, the modules are coupled to each other either electrically, mechanically, or in other forms.

In addition, each functional module in each embodiment of the disclosure can be integrated into one processing module, each module can exist separately, or two or more modules can be integrated into one module. The above integrated modules can be realized in the form of hardware or software function modules.

Referring to FIG. 19, FIG. 19 illustrates a structural block diagram of a user equipment provided by the embodiment of the present disclosure. The electronic device 100 (also referred to as user equipment) may be an electronic device capable of running an application program such as a smartphone, a tablet computer, an e-book, etc. The electronic device 100 in the present disclosure may include: one or more processors 110, a memory 120, a display 130, and one or more application programs. The one or more application programs may be stored in the memory 120 and configured to be executable by the one or more processors 110, and the one or more application programs are configured to execute a data processing method as described in the foregoing method embodiments.

The processor 110 may include one or more processing cores. The processor 110 uses various interfaces and lines to connect various parts in the whole electronic device 100, and performs various functions and data processing of the electronic device 100 by running or executing instructions, programs, code sets or instruction sets stored in the memory 120 and calling data stored in the memory 120. Alternatively, the processor 110 may be implemented in at least one hardware form of digital signal processing (DSP), field-programmable gate array (FPGA) and programmable logic array (PLA). The processor 110 may integrate one or more combinations of a central processing unit (CPU), a graphics processing unit (GPU), and a modem (also referred to as modulator-demodulator). Among them, the CPU mainly deals with operating system, user interface and application program; the GPU is used to render and draw the displayed content; and the modem is used to handle wireless communications. It can be understood that the above modem can also be realized by a single communication chip without being integrated into the processor 110.

The memory 120 may include a random access memory (RAM) or a read only memory. The memory 120 may be used to store instructions, programs, codes, code sets, or instruction sets. The memory 120 may include a storage program area and a storage data area. The storage program area may store instructions for realizing the operating system, instructions for realizing at least one function (such as touch function, sound playback function, image playback function, etc.), instructions for realizing the method embodiments, etc. The storage data area may store data (such as phonebook, audio and video data, chat record data) created by the terminal 100 in use.

Referring to FIG. 20, FIG. 20 illustrates a structural block diagram of a computer-readable storage medium provided by an example useful for understanding the invention but outside the scope of the invention as claimed. The computer-readable storage medium 2000 is configured to store program code that can be called by the processor to execute the method described in the above method embodiments.

The computer-readable storage medium 2000 may be an electronic memory such as flash memory, electrically erasable programmable read only memory (EEPROM), erasable programmable read only memory (EPROM), hard disk, or read-only memory (ROM). Alternatively, the computer-readable storage medium 2000 may include a non-volatile computer-readable storage medium. The computer-readable storage medium 2000 has a storage space for program codes 2010 that executes any of the method steps described above. These program codes can be read from or written into one or more computer program products. The program codes 2010 may be compressed, for example, in an appropriate form.

## Claims

1. A data processing method, applied to a first user equipment (100) of an augmented reality system, the first user equipment (100) comprising a first display screen, the system further comprising a second user equipment (200) communicatively connected to the first user equipment (100), and the second user equipment (200) comprising a second display screen; wherein the data processing method comprises:
displaying (S301, S401, S701, S910) virtual objects in a display area of the first display screen;
selecting a target virtual object from the virtual objects displayed in the display area of the first display screen;
presetting a trajectory table, wherein the trajectory table comprises identifications of the virtual objects and motion trajectories corresponding to the identifications;
determining the motion trajectory corresponding to the target virtual object from the trajectory table; and
triggering (S302, S402, S702, S920) the target virtual object to move towards the second user equipment (200) based on the motion trajectory so that the second user equipment (200), in response to the target virtual object moving into an observation area of the second user equipment (200), displays the target virtual object in a display area of the second display screen;
**characterized in that**, before the displaying (S301, S401, S701, S910) virtual objects in a display area of the first display screen, the method further comprises:
sending a connection request to the second user equipment (200), in response to the first user equipment (100) having determined that an orientation of a field of view of the second user equipment (200) is the same as an orientation of a field of view of the first user equipment (100), to complete a connection between the first user equipment (100) and the second user equipment.

2. The data processing method according to claim 1, wherein the determining the orientation of the field of view of the second user equipment (200) is the same as the orientation of the field of view of the first user equipment (100), comprises:
finding head contours of human bodies in an image collected by the first user equipment (100), removing all head contour not wearing any user equipment from the head contours, and
determining that the orientation of the field of view of the second user equipment (200) is the same as the orientation of the field of view of the first user equipment (100) in response to detecting a remaining head contour does not contain a face image.

3. The data processing method according to claim 1, wherein the target virtual object is a sphere, and an image of the target virtual object displayed on the display area of the first display screen at a first position of the motion trajectory is larger than an image of the target virtual object displayed on the display area of the first display screen at a last position of the motion trajectory when the sphere moves from near to far.

4. The data processing method according to claim 1, wherein the displaying (S301, S401, S701, S910) virtual objects in a display area of the first display screen, comprises:
obtaining a prop provided with a marker;
recognizing the marker to determine a display instruction; and
displaying the virtual objects in the display area of the first display screen based on the display instruction.

5. The data processing method according to claim 1, wherein after obtaining the target virtual object and the motion trajectory corresponding to the target virtual object, the data processing method further comprises:
determining a moving speed of the target virtual object; and
launching the target virtual object into a specified coordinate system, so that a user wearing the first user equipment (100) sees that the target virtual object is launched into a current space and moves along the motion trajectory with the moving speed.

6. The data processing method according to claim 5, wherein the launching the target virtual object into a specified coordinate system, comprises:
obtaining a launch gesture as a start instruction to launch the target virtual object into the specified coordinate system;
wherein the moving speed of the target virtual object corresponding to a gesture speed is set according to a gesture speed of the launch gesture.

7. The data processing method according to any one of claims 1-6, wherein the first user equipment (100) comprises a camera, the first user equipment and the second user equipment are located in a specified coordinate system, and the specified coordinate system is a spatial coordinate system with the first user equipment as an origin; and the method further comprises:
obtaining a coordinate point corresponding to a display position of the target virtual object in the specified coordinate system;
judging whether the target virtual object is within a viewing range of the camera of the first user equipment (100) based on the coordinate point;
determining the target virtual object is out of the sight of the first user equipment (100), in response to the target virtual object is not within the viewing range;
stopping (S403) displaying the target virtual object in the display area of the first display screen, in response to detecting the target virtual object is out of sight of the first user equipment (100);
wherein the viewing range of the camera is determined according to positions of feature points in an image collected by the camera in the spatial coordinate system.

8. The data processing method according to any one of claims 1-6, further comprising:
judging (S703, S940) whether the target virtual object is located in a blocked area;
determining the target virtual object is out of the sight of the first user equipment (100), in response to the target virtual object is located in the blocked area; and
stopping (S403) displaying the target virtual object in the display area of the first display screen, in response to detecting the target virtual object is out of sight of the first user equipment (100);
wherein the first user equipment and the second user equipment are located in a specified coordinate system, and the specified coordinate system is a spatial coordinate system with the first user equipment as an origin; and the blocked area is a blocked area corresponding to a user wearing the second user equipment (200) in the specified coordinate system.

9. The data processing method according to claim 8, further comprising:
obtaining a position of the target virtual object in the specified coordinate system at a current moment as a blocked point, in response to the target virtual object is located in the blocked area; and
sending the blocked point to the second user equipment (200), and instructing the second user equipment (200) to display an image of the target virtual object moving from a first position to a second position in the second display screen, wherein the first position corresponds to the blocked point, and the second position corresponds to an end point of the motion trajectory.

10. The data processing method according to claim 8, wherein the method further comprises:
changing, based on a modified position, the specified coordinate system, in response to detecting a position of the first user equipment (100) within a current scene where the augmented reality system is located changes; and
executing the operation of acquiring the blocked area corresponding to the user wearing the second user equipment (200) in the specified coordinate system again.

11. The data processing method according to any one of claims 1-10, wherein the first user equipment (100) comprises a first camera, the second user equipment (200) comprises a second camera, the target virtual object moves towards the second user equipment (200) in a specified coordinate system, and the method, before the triggering the target virtual object to move towards the second user equipment (200), further comprises:
obtaining, based on the first camera scanning a current scene where the augmented reality system is located, first scanning data; and
establishing, based on the first scanning data, the specified coordinate system, and sending the specified coordinate system to the second user equipment (200) to make the second user equipment (200), after establishing a coordinate system based on second scanning data obtained according to the second camera scanning the current scene where the augmented reality system is located, align the established coordinate system with the specified coordinate system.

12. A user equipment, comprising:
one or more processors;
a memory;
a display screen; and
one or more application programs, wherein the one or more application programs are stored in the memory and configured to be executable by the one or more processors, and the one or more application programs are configured to execute the data processing method according to any one of claims 1-11.

13. An augmented reality system, comprising:
the first user equipment (100) according to claim 12; and
the second user equipment (200) communicatively connected to the first user equipment (100).

## Patentansprüche

1. Datenverarbeitungsverfahren, angewendet auf ein erstes Benutzergerät (100) eines Augmented-Reality-Systems, wobei das erste Benutzergerät (100) einen ersten Anzeigebildschirm umfasst, das System ferner ein zweites Benutzergerät (200) umfasst, das mit dem ersten Benutzergerät (100) kommunikationsfähig verbunden ist, und das zweite Benutzergerät (200) einen zweiten Anzeigebildschirm umfasst; wobei das Datenverarbeitungsverfahren Folgendes umfasst:
Anzeigen (S301, S401, S701, S910) virtueller Objekte in einem Anzeigebereich des ersten Anzeigebildschirms;
Auswählen eines virtuellen Zielobjekts aus den virtuellen Objekten, die im Anzeigebereich des ersten Anzeigebildschirms angezeigt werden;
Voreinstellen einer Trajektorientabelle, wobei die Trajektorientabelle Identifikationen der virtuellen Objekte und Bewegungstrajektorien umfasst, die den Identifikationen entsprechen;
Bestimmen der Bewegungstrajektorien, die dem virtuellen Zielobjekt aus der Trajektorientabelle entspricht; und
Auslösen (S302, S402, S702, S920) des virtuellen Zielobjekts zur Bewegung in Richtung des zweiten Benutzergeräts (200) basierend auf der Bewegungstrajektorie, sodass, wenn sich das virtuelle Zielobjekt in den Beobachtungsbereich des zweiten Benutzergeräts (200) bewegt, das zweite Benutzergerät (200) das virtuelle Zielobjekt in einem Anzeigebereich des zweiten Anzeigebildschirms anzeigt;
**dadurch gekennzeichnet, dass** vor dem Anzeigen (S301, S401, S701, S910) virtueller Objekte in einem Anzeigebereich des ersten Anzeigebildschirms das Verfahren ferner Folgendes umfasst:
Senden einer Verbindungsanforderung an das zweite Benutzergerät (200), wenn das erste Benutzergerät (100) bestimmt hat, dass die Ausrichtung eines Sichtfelds des zweiten Benutzergeräts (200) gleich wie die Ausrichtung eines Sichtfelds des ersten Benutzergeräts (100) ist, um eine Verbindung zwischen dem ersten Benutzergerät (100) und dem zweiten Benutzergerät herzustellen.

2. Datenverarbeitungsverfahren nach Anspruch 1, wobei das Bestimmen, dass die Ausrichtung des Sichtfelds des zweiten Benutzergeräts (200) gleich wie die Ausrichtung des Sichtfelds des ersten Benutzergeräts (100) ist, Folgendes umfasst:
Ermitteln von Kopfkonturen menschlicher Körper in einem durch das erste Benutzergerät (100) erfassten Bild, Entfernen aller Kopfkonturen, die kein Benutzergerät tragen, und Bestimmen, dass die Ausrichtung des Sichtfelds des zweiten Benutzergeräts (200) gleich wie die Ausrichtung des Sichtfelds des ersten Benutzergeräts (100) ist, wenn erkannt wird, dass eine verbleibende Kopfkontur kein Gesichtsbild enthält.

3. Datenverarbeitungsverfahren nach Anspruch 1, wobei das virtuelle Zielobjekt eine Kugel ist und ein Bild des Zielobjekts, das an einer ersten Position der Bewegungsbahn im Anzeigebereich des ersten Bildschirms angezeigt wird, größer als ein Bild des virtuellen Zielobjekts ist, das an einer letzten Position der Bewegungstrajektorie im Anzeigebereich des ersten Anzeigebildschirms angezeigt wird, wenn sich die Kugel von nah nach fern bewegt.

4. Datenverarbeitungsverfahren nach Anspruch 1, wobei das Anzeigen (S301, S401, S701, S910) virtueller Objekte in einem Anzeigebereich des ersten Bildschirms Folgendes umfasst:
Erhalten eines Requisits, das mit einem Marker versehen ist;
Erkennen des Markers zur Bestimmung einer Anzeigeanweisung; und
Anzeigen der virtuellen Objekte im Anzeigebereich des ersten Anzeigebildschirms basierend auf der Anzeigeanweisung.

5. Datenverarbeitungsverfahren nach Anspruch 1, wobei nach dem Erhalten des virtuellen Zielobjekts und der Bewegungstrajektorie, die dem virtuellen Zielobjekt entspricht, das Datenverarbeitungsverfahren ferner Folgendes umfasst:
Bestimmen einer Bewegungsgeschwindigkeit des virtuellen Zielobjekts; und
Starten des virtuellen Zielobjekts in ein spezifiziertes Koordinatensystem, sodass ein Benutzer, der das erste Benutzergerät (100) trägt, sieht, dass das virtuelle Zielobjekt in einen aktuellen Raum gestartet wird und sich entlang der Bewegungstrajektorie mit der Bewegungsgeschwindigkeit bewegt.

6. Datenverarbeitungsverfahren nach Anspruch 5, wobei das Starten des virtuellen Zielobjekts in ein spezifiziertes Koordinatensystem Folgendes umfasst:
Erfassen einer Startgeste als Startanweisung zum Starten des virtuellen Zielobjekts in das spezifizierte Koordinatensystem;
wobei die Bewegungsgeschwindigkeit des virtuellen Zielobjekts entsprechend einer Gestengeschwindigkeit basierend auf der Gestengeschwindigkeit der Startgeste eingestellt wird.

7. Datenverarbeitungsverfahren nach einem der Ansprüche 1-6, wobei das erste Benutzergerät (100) eine Kamera umfasst, das erste Benutzergerät und das zweite Benutzergerät sich in einem spezifizierten Koordinatensystem befinden, und das spezifizierte Koordinatensystem ein räumliches Koordinatensystem mit dem ersten Benutzergerät als Ursprung ist; und das Verfahren ferner Folgendes umfasst:
Erhalten eines Koordinatenpunkts, der einer Anzeigeposition des virtuellen Zielobjekts in dem spezifizierten Koordinatensystem entspricht;
Beurteilen, ob sich das virtuelle Zielobjekt basierend auf dem Koordinatenpunkt im Sichtbereich der Kamera des ersten Benutzergeräts (100) befindet;
Bestimmen, dass sich das virtuelle Zielobjekt außerhalb des Sichtbereichs des ersten Benutzergeräts (100) befindet, wenn festgestellt wird, dass sich das virtuelle Zielobjekt nicht im Sichtbereich befindet;
Stoppen (S403) der Anzeige des virtuellen Zielobjekts im Anzeigebereich des ersten Anzeigebildschirms, wenn festgestellt wird, dass sich das virtuelle Zielobjekt außerhalb des Sichtbereichs des ersten Benutzergeräts (100) befindet;
wobei der Sichtbereich der Kamera basierend auf Positionen von Merkmalspunkten in einem durch die Kamera im räumlichen Koordinatensystem erfassten Bild bestimmt wird.

8. Datenverarbeitungsverfahren gemäß einem der Ansprüche 1-6, ferner umfassend:
Beurteilen (S703, S940), ob sich das virtuelle Zielobjekt in einem gesperrten Bereich befindet;
Bestimmen, dass sich das virtuelle Zielobjekt außerhalb des Sichtbereichs des ersten Benutzergeräts (100) befindet, wenn festgestellt wird, dass sich das virtuelle Zielobjekt in dem gesperrten Bereich befindet; und
Stoppen (S403) der Anzeige des virtuellen Zielobjekts im Anzeigebereich des ersten Anzeigebildschirms, wenn festgestellt wird, dass sich das virtuelle Zielobjekt außerhalb des Sichtbereichs des ersten Benutzergeräts (100) befindet;
wobei sich das erste Benutzergerät und das zweite Benutzergerät in einem spezifizierten Koordinatensystem befinden und das spezifizierte Koordinatensystem ein räumliches Koordinatensystem mit dem ersten Benutzergerät als Ursprung ist; und der gesperrte Bereich ein gesperrter Bereich ist, der einem Benutzer entspricht, der das zweite Benutzergerät (200) in dem spezifizierten Koordinatensystem trägt.

9. Datenverarbeitungsverfahren nach Anspruch 8, ferner umfassend:
Ermitteln einer Position des virtuellen Zielobjekts im spezifizierten Koordinatensystem zu einem aktuellen Zeitpunkt als gesperrter Punkt, wenn festgestellt wird, dass sich das virtuelle Zielobjekt in einem gesperrten Bereich befindet; und
Senden des gesperrten Punkts an das zweite Benutzergerät (200) und Anweisen des zweiten Benutzergeräts (200), ein Bild des virtuellen Zielobjekts anzuzeigen, das sich von einer ersten Position zu einer zweiten Position im zweiten Anzeigebildschirm bewegt, wobei die erste Position dem gesperrten Punkt entspricht und die zweite Position einem Endpunkt der Bewegungstrajektorie entspricht.

10. Datenverarbeitungsverfahren nach Anspruch 8, wobei das Verfahren ferner Folgendes umfasst:
Ändern des spezifizierten Koordinatensystems basierend auf einer modifizierten Position, wenn festgestellt wird, dass sich eine Position des ersten Benutzergeräts (100) innerhalb einer aktuellen Szene geändert hat, in der sich das Augmented-Reality-System befindet; und
Ausführen der Operation zum erneuten Erfassen des gesperrten Bereichs entsprechend dem Benutzer, der das zweite Benutzergerät (200) im spezifizierten Koordinatensystem trägt.

11. Datenverarbeitungsverfahren nach einem der Ansprüche 1-10, wobei das erste Benutzergerät (100) eine erste Kamera umfasst, das zweite Benutzergerät (200) eine zweite Kamera umfasst, sich das virtuelle Zielobjekt in einem spezifizierten Koordinatensystem in Richtung des zweiten Benutzergeräts (200) bewegt und wobei vor dem Auslösen des Bewegens des virtuellen Zielobjekts in Richtung des zweiten Benutzergeräts (200) ferner Folgendes umfasst:
Erfassen erster Scandaten basierend auf dem Scannen einer aktuellen Szene durch die erste Kamera, in der sich das Augmented-Reality-System befindet; und
Erstellen eines spezifizierten Koordinatensystems basierend auf den ersten Scandaten und Senden des spezifizierten Koordinatensystems an das zweite Benutzergerät (200), um sicherzustellen, dass das zweite Benutzergerät (200), nachdem es ein Koordinatensystem basierend auf zweiten Scandaten erstellt hat, die durch die zweite Kamera beim Scannen der aktuellen Szene erfasst wurden, das erstellte Koordinatensystem mit dem spezifizierten Koordinatensystem ausrichtet.

12. Benutzergerät, umfassend:
einen oder mehrere Prozessoren;
einen Speicher;
einen Anzeigebildschirm; und
ein oder mehrere Anwendungsprogramme, wobei das eine oder die mehreren Anwendungsprogramme im Speicher gespeichert und dazu ausgelegt sind, durch den einen oder die mehreren Prozessoren ausführbar zu sein, und das eine oder die mehreren Anwendungsprogramme dazu ausgelegt sind, das Datenverarbeitungsverfahren nach einem der Ansprüche 1-11 auszuführen.

13. Augmented-Reality-System, umfassend:
das erste Benutzergerät (100) nach Anspruch 12; und
das zweite Benutzergerät (200), das kommunikationsfähig mit dem ersten Benutzergerät (100) verbunden ist.

## Revendications

1. Procédé de traitement de données, appliqué à un premier équipement utilisateur (100) d'un système de réalité augmentée, le premier équipement utilisateur (100) comprenant un premier écran d'affichage, le système comprenant en outre un second équipement utilisateur (200) connecté en communication au premier équipement utilisateur (100), et le second équipement utilisateur (200) comprenant un second écran d'affichage ; dans lequel le procédé de traitement de données comprend :
l'affichage (S301, S401, S701, S910) d'objets virtuels dans une zone d'affichage du premier écran d'affichage ;
la sélection d'un objet virtuel cible parmi les objets virtuels affichés dans la zone d'affichage du premier écran d'affichage ;
le préréglage d'une table de trajectoires, dans lequel la table de trajectoires comprend des identifications des objets virtuels et des trajectoires de mouvement correspondant aux identifications ;
la détermination de la trajectoire de mouvement correspondant à l'objet virtuel cible, au moyen de la table de trajectoires ; et
le déclenchement (S302, S402, S702, S920) de l'objet virtuel cible pour qu'il se meuve vers le second équipement utilisateur (200) sur la base de la trajectoire de mouvement, de telle sorte que le second équipement utilisateur (200), en réponse à la circonstance dans laquelle l'objet virtuel cible se meut jusque dans une zone d'observation du second équipement utilisateur (200), affiche l'objet virtuel cible dans une zone d'affichage du second écran d'affichage ;
**caractérisé en ce que**, avant l'affichage (S301, S401, S701, S910) d'objets virtuels dans une zone d'affichage du premier écran d'affichage, le procédé comprend en outre :
l'envoi d'une demande de connexion au second équipement utilisateur (200), en réponse à la circonstance dans laquelle le premier équipement utilisateur (100) a déterminé qu'une orientation d'un champ de visualisation du second équipement utilisateur (200) est la même qu'une orientation d'un champ de visualisation du premier équipement utilisateur (100), pour achever une connexion entre le premier équipement utilisateur (100) et le second équipement utilisateur.

2. Procédé de traitement de données selon la revendication 1, dans lequel la détermination que l'orientation du champ de visualisation du second équipement utilisateur (200) est la même que l'orientation du champ de visualisation du premier équipement utilisateur (100) comprend :
la découverte de contours de têtes de corps humains dans une image collectée par le premier équipement utilisateur (100),
l'élimination, des contours de têtes, de tout contour de tête ne portant pas d'équipement utilisateur, et
la détermination que l'orientation du champ de visualisation du second équipement utilisateur (200) est la même que l'orientation du champ de visualisation du premier équipement utilisateur (100) en réponse à la détection qu'un contour de tête restant ne contient pas d'image de visage.

3. Procédé de traitement de données selon la revendication 1, dans lequel l'objet virtuel cible est une sphère, et une image de l'objet virtuel cible affiché sur la zone d'affichage du premier écran d'affichage à une première position de la trajectoire de mouvement est plus grande qu'une image de l'objet virtuel cible affiché sur la zone d'affichage du premier écran d'affichage à une dernière position de la trajectoire de mouvement lorsque la sphère se meut de près à loin.

4. Procédé de traitement de données selon la revendication 1, dans lequel l'affichage (S301, S401, S701, S910) d'objets virtuels dans une zone d'affichage du premier écran d'affichage, comprend :
l'obtention d'un accessoire pourvu d'un marqueur ;
la reconnaissance du marqueur pour déterminer une instruction d'affichage ; et
l'affichage des objets virtuels dans la zone d'affichage du premier écran d'affichage sur la base de l'instruction d'affichage.

5. Procédé de traitement de données selon la revendication 1, dans lequel, après l'obtention de l'objet virtuel cible et de la trajectoire de mouvement correspondant à l'objet virtuel cible, le procédé de traitement de données comprend en outre :
la détermination d'une vitesse de mouvement de l'objet virtuel cible ; et
le lancement de l'objet virtuel cible dans un système de coordonnées spécifié, de telle sorte qu'un utilisateur portant le premier équipement utilisateur (100) voit que l'objet virtuel cible est lancé dans un espace actuel et se meut le long de la trajectoire de mouvement avec la vitesse de mouvement.

6. Procédé de traitement de données selon la revendication 5, dans lequel le lancement de l'objet virtuel cible dans un système de coordonnées spécifié comprend :
l'obtention d'un geste de lancement en tant qu'instruction de départ pour lancer l'objet virtuel cible dans le système de coordonnées spécifié ;
dans lequel la vitesse de mouvement de l'objet virtuel cible correspondant à une vitesse de geste est réglée selon une vitesse de geste du geste de lancement.

7. Procédé de traitement de données selon l'une quelconque des revendications 1 à 6, dans lequel le premier équipement utilisateur (100) comprend une caméra, le premier équipement utilisateur et le second équipement utilisateur sont situés dans un système de coordonnées spécifié, et le système de coordonnées spécifié est un système de coordonnées spatial avec le premier équipement utilisateur en tant qu'origine ; et le procédé comprend en outre :
l'obtention d'un point de coordonnées correspondant à une position d'affichage de l'objet virtuel cible dans le système de coordonnées spécifié ;
l'évaluation du fait que l'objet virtuel cible est, ou n'est pas, dans les limites d'une distance de vision de la caméra du premier équipement utilisateur (100) sur la base du point de coordonnées ;
la détermination que l'objet virtuel cible est hors de la vue du premier équipement utilisateur (100), en réponse à la circonstance dans laquelle l'objet virtuel cible n'est pas dans les limites de la distance de vision ;
l'arrêt (S403) de l'affichage de l'objet virtuel cible dans la zone d'affichage du premier écran d'affichage, en réponse à la détection que l'objet virtuel cible est hors de la vue du premier équipement utilisateur (100) ;
dans lequel la distance de vision de la caméra est déterminée selon des positions de points caractéristiques dans une image collectée par la caméra dans le système de coordonnées spatial.

8. Procédé de traitement de données selon l'une quelconque des revendications 1 à 6, comprenant en outre :
l'évaluation (S703, S940) du fait que l'objet virtuel cible est, ou n'est pas, situé dans une zone bloquée ;
la détermination que l'objet virtuel cible est hors de la vue du premier équipement utilisateur (100), en réponse à la circonstance dans laquelle l'objet virtuel cible est situé dans la zone bloquée ; et
l'arrêt (S403) de l'affichage de l'objet virtuel cible dans la zone d'affichage du premier écran d'affichage, en réponse à la détection que l'objet virtuel cible est hors de vue du premier équipement utilisateur (100) ;
dans lequel le premier équipement utilisateur et le second équipement utilisateur sont situés dans un système de coordonnées spécifié, et le système de coordonnées spécifié est un système de coordonnées spatial avec le premier équipement utilisateur en tant qu'origine ; et la zone bloquée est une zone bloquée correspondant à un utilisateur portant le second équipement utilisateur (200) dans le système de coordonnées spécifié.

9. Procédé de traitement de données selon la revendication 8, comprenant en outre :
l'obtention d'une position de l'objet virtuel cible dans le système de coordonnées spécifié à un moment actuel en tant que point bloqué, en réponse à la circonstance dans laquelle l'objet virtuel cible est situé dans la zone bloquée ; et
l'envoi du point bloqué au second équipement utilisateur (200), et l'instruction donnée au second équipement utilisateur (200) d'afficher une image de l'objet virtuel cible se mouvant d'une première position à une seconde position dans le second écran d'affichage, dans lequel la première position correspond au point bloqué, et la seconde position correspond à un point final de la trajectoire de mouvement.

10. Procédé de traitement de données selon la revendication 8, dans lequel le procédé comprend en outre :
le changement, sur la base d'une position modifiée, du système de coordonnées spécifié, en réponse à la détection qu'une position du premier équipement utilisateur (100) à l'intérieur d'une scène actuelle où le système de réalité augmentée est situé change ; et
l'exécution de l'opération de l'acquisition de la zone bloquée correspondant à l'utilisateur portant le second équipement utilisateur (200) dans le système de coordonnées spécifié à nouveau.

11. Procédé de traitement de données selon l'une quelconque des revendications 1 à 10, dans lequel le premier équipement utilisateur (100) comprend une première caméra, le second équipement utilisateur (200) comprend une seconde caméra, l'objet virtuel cible se meut vers le second équipement utilisateur (200) dans un système de coordonnées spécifié, et le procédé, avant le déclenchement de l'objet virtuel cible pour qu'il se meuve vers le second équipement utilisateur (200), comprend en outre :
l'obtention, sur la base du cas dans lequel la première caméra balaye une scène actuelle où le système de réalité augmentée est situé, de premières données de balayage ; et
l'établissement, sur la base des premières données de balayage, du système de coordonnées spécifié, et l'envoi du système de coordonnées spécifié au second équipement utilisateur (200) pour amener le second équipement utilisateur (200), après l'établissement d'un système de coordonnées sur la base de secondes données de balayage obtenues selon le cas dans lequel la seconde caméra balaye la scène actuelle où le système de réalité augmentée est situé, à aligner le système de coordonnées établi avec le système de coordonnées spécifié.

12. Équipement utilisateur, comprenant :
un ou plusieurs processeurs ;
une mémoire ;
un écran d'affichage ; et
un ou plusieurs programmes d'application, dans lequel l'un ou les plusieurs programmes d'application sont stockés dans la mémoire et configurés pour être exécutables par l'un ou les plusieurs processeurs, et l'un ou les plusieurs programmes d'application sont configurés pour exécuter le procédé de traitement de données selon l'une quelconque des revendications 1 à 11.

13. Système de réalité augmentée, comprenant :
le premier équipement utilisateur (100) selon la revendication 12 ; et
le second équipement utilisateur (200) connecté en communication au premier équipement utilisateur (100).
